## Europäisches Patentamt

## European Patent Office

## Office européen des brevets

(19)

(11) Veröffentlichungsnummer: **0 087 589**
**B1**

(12)

# EUROPÄISCHE PATENTSCHRIFT

(45) Veröffentlichungstag der Patentschrift:
**04.09.85**

(51) Int. Cl.⁴: **A 01 K 7/06**

(21) Anmeldenummer: **83100791.9**

(22) Anmeldetag: **28.01.83**

(54) **Viehselbsttränkebecken.**

(30) Priorität: **03.03.82 DE 8205822 U**

(43) Veröffentlichungstag der Anmeldung:
**07.09.83 Patentblatt 83/36**

(45) Bekanntmachung des Hinweises auf die Patenterteilung:
**04.09.85 Patentblatt 85/36**

(84) Benannte Vertragsstaaten:
**BE DE FR GB IT**

(56) Entgegenhaltungen:
**DE - A - 2 213 410**
**DE - C - 916 002**
**DE - U - 1 950 443**
**DE - U - 1 974 961**
**DE - U - 8 017 991**
**DE - U - 8 205 205**

(73) Patentinhaber: **SUEVIA HAIGES GMBH & CO.,**
**Postfach 1108 Max-Eyth-Strasse,**
**D-7125 Kirchheim/Neckar (DE)**

(72) Erfinder: **Haiges, Adolf, Hölderlinstrasse 10,**
**D-7124 Bönnigheim (DE)**

(74) Vertreter: **Wolff, Michael, Dipl.-Phys., Kirchheimer**
**Strasse 69, D-7000 Stuttgart 75 (DE)**

ACTORUM AG

## Beschreibung

Die Erfindung betrifft ein Viehselbsttränkebecken mit einer Bohrungen aufweisenden Rückwand aus nachgiebigem Material wie Kunststoff, die an ein Standrohr mit radialer Bohrung oder an eine Mauer anlegbar ist. Solche vorbenutzten Becken gehören zum Stand der Technik.

Bei den im Vergleich mit den Viehselbsttränkebecken aus Metall, insbesondere Gusseisen, bisher seltenen Becken aus Kunststoffmaterial wurde die Befestigung des Beckens an einem Standrohr oder an einer Mauer mittels metallischer Einlagen in das Kunststoffmaterial oder mittels metallischer Armierungen versucht, welche dem Kunststoffmaterial insbesondere an den Befestigungsstellen die notwendige Festigkeit geben sollten. Abgesehen vom hohen Herstellungsaufwand haben sich diese Befestigungsmittel praktisch nicht bewährt.

Der Erfindung liegt daher die Aufgabe zugrunde, ein Viehselbsttränkebecken der eingangs genannten Art zu schaffen, welches einfach und sicher befestigbar ist, ohne beim Befestigen selbst Schaden zu nehmen.

Diese Aufgabe ist bei einem Viehselbsttränkebecken der eingangs genannten Art erfindungsgemäss gelöst durch eine auf der Innenseite der Rückwand angeordnete Metallplatte mit einem senkrecht abstehenden, durch einen Durchbruch, insbesondere eine Bohrung der Rückwand ragenden Bolzen für den Eingriff in die Rohrbohrung beziehungsweise für das Eindringen in die Mauer, und mit zwei Befestigungsdurchbrüchen, insbesondere Befestigungsbohrungen, die mit Bohrungen der Rückwand fluchten; und durch eine am Standrohr anlegbare Bügelschraube, deren Schraubenschenkel durch die Paare fluchtender Bohrungen greifen und mit gegen die Platte festziehbaren Muttern versehen sind, beziehungsweise durch zwei Mauerdübelschrauben, die durch die Paare fluchtender Bohrungen greifen und deren Köpfe oder Muttern gegen die Platte festziehbar sind. Dadurch wird vorteilhafterweise nicht nur erreicht, dass die Beckenschale und die Rückwand des Beckens auf einfache Weise aus Kunststoffmaterial herstellbar sind, ohne dass dabei auf Einlagen oder Armierungen Rücksicht genommen werden muss, sondern vor allem, dass die Montage (und Demontage) des Beckens wahlweise an einem Standrohr oder an einer Mauer möglich ist, und zwar so, dass das Becken auch im Falle der Befestigung an einem Standrohr nicht um eine Hochachse, nämlich die vertikale Rohrachse schwenkbar ist. Bei Befestigung des erfindungsgemässen Viehselbsttränkebeckens an einer Mauer lässt man den Bolzen in die Mauer am besten in eine Fuge eindringen, wo er für zusätzlichen Halt sorgt.

Bei einer vorteilhaften Ausführungsform des erfindungsgemässen Viehselbsttränkebeckens weist die Rückwand auf ihrer Innenseite eine Vertiefung auf, in der die hineinpassende Platte liegt. Infolgedessen ist das Becken nicht nur zwischen Platte und Standrohr beziehungsweise Mauer eingeklemmt, sondern es ist zusätzlich an der Platte aufgehängt, was die Befestigung verbessert.

Bei einer ersten Ausführungsform weist der Bolzen eine in die Mauer dringende Spitze auf, die das Versenken des Bolzens wesentlich erleichtert.

Bei einer ersten Ausführungsform weist das halbkreisförmig gebogene, gewindelose Joch der Bügelschraube auf seiner konkaven Innenseite in das Standrohr eindringende Vorsprünge auf, die beispielsweise durch Quetschen des Bügelmaterials hervorgebracht sein können und sich beim Anziehen der Muttern in das zur Befestigung benutzte Standrohr eingraben.

Bei der ersten Ausführungsform, deren Rückwand gemäss DE-U Nr. 1950443 von einer Mauer Abstand haltende Nocken aufweist, deren Stirnflächen in ein und derselben Ebene liegen, ist zumindest zur Befestigung des Beckens an einer Mauer vorgesehen, dass das Bolzenende die Nockenebene durchdringt, damit das Becken tatsächlich mittels der Bolzenspitze in der Mauer verankerbar ist.

Bei der ersten Ausführungsform mit, gemäss Stand der Technik, einem aus ortsfester Düse und beweglichem Verschlusskörper bestehenden Wasserzulaufventil sowie einem drehbaren Hebel mit einem den Verschlusskörper tragenden kürzeren Arm und einem gefederten längeren Arm als Ventilbetätigungszunge, die um eine waagrechte Achse schwenkbar ist, ist der Hebel an der Platte angelenkt und stützt sich die Feder an der Platte ab. Die starre Platte bildet also ein solides Gelenk beziehungsweise Widerlager. Zumindest das Gelenklager hätte, aus Kunststoffmaterial hergestellt, nicht die notwendige Lebensdauer, da es bei dem robusten Umgang des Viehs mit Selbsttränkebecken bald Schaden nehmen würde. Schliesslich ist die Feder bei der ersten Ausführungsform auf einer die Platte vorn durchdringenden Verlängerung des Bolzens gelagert. Dadurch ist das sich an der Platte abstützende Federende am seitlichen Ausweichen sehr einfach gehindert.

Aus der DE-U Nr. 8205205 oder DE-U Nr. 8017991 ist ein Viehselbsttränkebecken bekannt, mit zwei vertikal fluchtenden Bohrungen zur Aufnahme und zum axialen Festlegen eines geraden Abschnitts einer Wasserzuleitung, an welche mittels einer Überwurfmutter eine Ventilvorrichtung mit anhängender Ventilbetätigungsvorrichtung angefügt ist. Die Überwurfmutter wird zwar auf beiden Seiten der Ventilvorrichtung von zwei Nocken unterstützt, die an der Rückwand des Beckens vorgesehen sind. Diese Nocken können jedoch nicht verhindern, dass ein Tier die Ventilvorrichtung mitsamt dem dort endenden Leitungsabschnitt von vorn nach hinten drückt, so dass die Ventilbetätigungsvorrichtung nicht mehr zum Öffnen des Ventils gebracht werden kann. Um diesen Nachteil zu vermeiden, zeichnet sich eine zweite Ausführungsform des erfindungsgemässen Viehselbsttränkebeckens dadurch aus, dass die Metallplatte auf ihrer dem Bolzen abgewandten Seite mit einem kolinearen Stössel versehen ist, der zur seitlichen Stützung der Ventilvorrichtung mit einer in gleicher Höhe wie der Stössel angeordneten Überwurfmutter zusammenwirkt. Die Anordnung von Stössel und Überwurfmutter wird so getroffen, dass beide bei vertikal ausgerichteter Linearanordnung von Leitungsabschnitt, Ventilvorrichtung und ihrer Betätigungsvorrichtung im Abstand von der Rückwand aneinanderliegen, so dass es auch nicht zur geringsten Auslenkung der Ventilvorrichtung gegen die Rückwand kommen kann.

Um die Herstellung der Metallplatte der zweiten Ausführungsform zu vereinfachen, bilden der Bolzen und der Stössel einen gestuften Metallzylinder, der in einer koaxialen Bohrung der Metallplatte, zum Beispiel fest, sitzt, an deren Berandung der Stössel (oder Bolzen) anschlägt.

Bei einer dritten und vierten Ausführungsform des erfindungsgemässen Viehselbsttränkebeckens, welche wie bekannte Becken Teile zu ihrer Befestigung aufweisen, sind zwei die Rückwand bildende Befestigungsteile vorhanden, zwischen denen der Durchbruch der Rückwand besteht, und ist die Metallplatte an ihren Enden mit rechtwinklig abgebogenen Haltelaschen versehen, welche die Befestigungsteile seitlich erfassen. Die Haltelaschen sorgen bei der Befestigung des Beckens für die richtige Positionierung, die wegen der zur Deckung zu bringenden Durchbrüche in der Metallplatte beziehungsweise in der Beckenrückwand wichtig ist, und ausserdem für einen Zusammenhalt der durch die Befestigung am meisten beanspruchten Teile des Beckens.

Die dritte und vierte Ausführungsform sind Becken mit, gemäss Stand der Technik, einem Anschluss-Gehäuse zur Aufnahme eines Krümmers oder T-Stücks einer Wasserleitung, welches zwei parallele Seitenwände aufweist. Die Ausführungsformen sind so gestaltet, dass beide Seitenwände je einen Durchbruch für den Durchtritt der Metallplatte aufweisen, die an der Rückwand des Beckens angreift, so dass das genannte seitliche Erfassen der Beckenbefestigungsteile der Beckenrückwand ungestört möglich ist. Von den zwei Durchbrüchen kann einer eine kleinere Ausdehnung senkrecht zur Beckenrückwand aufweisen als der andere, welcher eine Schwenkung der Metallplatte mit Bolzen am einen Plattenende ermöglichen muss.

Sowohl die dritte als auch die vierte Ausführungsform ist ein Becken, dessen Anschluss-Gehäuse gemäss Stand der Technik eine einer Tränkeschale zugekehrte Vorderwand mit einer Bohrung zur Einlochmontage eines zweiten Krümmers oder eines Ventilgehäuses aufweist. Bei dieser Einlochmontage tritt anders als im Fall eines Beckens aus Metall oder Gusseisen das eingangs erwähnte Befestigungsproblem auf ähnliche Weise auf, weil Kunststoffmaterial nicht unbedingt die wünschenswerte Festigkeit und Standzeit besitzt. Deshalb ist erfindungsgemäss vorgesehen, dass die Berandung der Montagebohrung der Gehäusevorderwand zwischen zwei Metallplatten eingeklemmt ist, die mittels zweier die Vorderwand durchdringender Schraubenbolzen miteinander verbunden sind und den zweiten Krümmer beziehunsweise das Ventilgehäuse lagern. Es ist also eine gleichartige Lösung für ein verwandtes Problem gefunden worden.

Bei der dritten Ausführungsform ist die Vorderwand des Anschlussgehäuses auf ihrer Innenseite mit einem Steg versehen, auf dem sich die innenliegende Klemmplatte zur Verbesserung der Montagestabilität abstützt.

Die dritte Ausführungsform zeichnet sich ferner dadurch aus, dass der zweite Krümmer mit einer Wasserstromeinstellschraube versehen ist und dass an den zweiten Krümmer mittels einer Überwurfmutter eine Ventilvorrichtung mit anhängender Ventilbetätigungsvorrichtung angefügt ist sowie dass die aussenliegende Klemmplatte und der zweite Krümmer beziehungsweise das Ventilgehäuse einstückig ausgebildet sind. Einerseits ist dadurch eine genaue Dosierung des maximalen Wasserdurchflusses und eine leichte Betätigung des Ventils möglich; andererseits wird dadurch die Montage des zweiten Krümmers beziehungsweise des Ventils vereinfacht.

Bei der vierten Ausführungsform ist das Ventilgehäuse mit wenigstens einem Auge zur Anlenkung einer Ventilbetätigungsklappe versehen, die oft verwendet wird und so zweckmässig gelagert ist, weil die zwei verschraubten Metallplatten eine schädliche Schwenkung der Klappe um die Achse des Ventilgehäuses durch ein Tier, dass seitlich an der Klappe angreift, gänzlich ausschliessen.

Im folgenden ist die Erfindung anhand der vier durch die Zeichnung beispielhaft dargestellten, zuvor gekennzeichneten Ausführungsformen des erfindungsgemässen Viehselbsttränkebeckens im einzelnen erläutert. Es zeigt:

Fig. 1 einen zentralen vertikalen Längsschnitt durch die erste Ausführungsform in Verbindung mit einem Standrohr, nach der Linie I-I in Fig. 2;

Fig. 2 einen waagrechten Querschnitt durch die erste Ausführungsform in Verbindung mit dem Standrohr, nach der Linie II-II in Fig. 1;

Fig. 3 einen zentralen vertikalen Längsschnitt durch die zweite Ausführungsform in Verbindung mit einem Standrohr und einer Mauer, nach der geraden Linie III-III in Fig. 4;

Fig. 4 einen waagrechten Querschnitt durch die zweite Ausführungsform in Verbindung mit dem Standrohr beziehungsweise der Mauer, nach der geraden Linie IV-IV in Fig. 3;

Fig. 5 einen zentralen vertikalen Längsschnitt durch die dritte Ausführungsform in Verbindung mit einem Standrohr, nach der geraden Linie V-V in Fig. 6;

Fig. 6 einen gestuften waagrechten Querschnitt durch die dritte Ausführungsform in Verbindung mit dem Standrohr, nach der rechtwinklig gekröpften Linie VI-VI in Fig. 5;

Fig. 7 einen zentralen vertikalen Längsschnitt durch die vierte Ausführungsform in Verbindung mit einem Standrohr, nach der geraden Linie VII-VII in Fig. 8; und

Fig. 8 einen gestuften waagrechten Querschnitt durch die vierte Ausführungsform in Verbindung mit dem Standrohr, nach der gekröpften Linie VIII-VIII in Fig. 7.

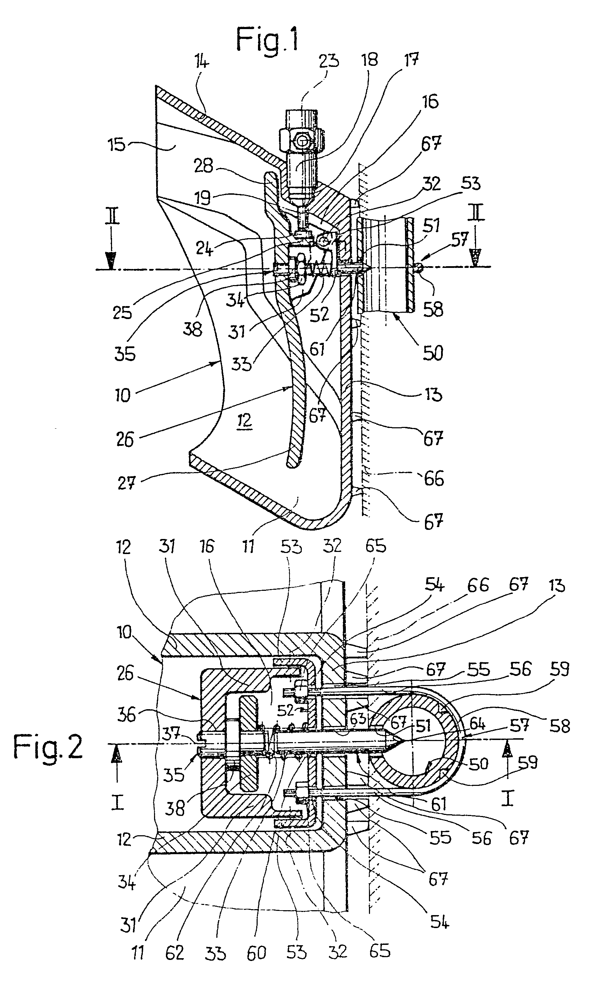

Die zum Selbsttränken von Schweinen bestimmte und geeignete Ausführungsform gemäss Fig. 1 und 2 ist ein Becken 10 mit einer Tränkeschale 11, deren Seitenwände 12 und deren Rückwand 13 an ihren oberen Enden in eine Deckwand 14 übergehen, die sich über die ganze Schale erstreckt. Soweit die Seitenwände 12 die Tränkeschale 11 begrenzen, verlaufen sie als ebene Wände parallel zueinander. In dem der Rückwand 13 benachbarten Teil bilden beide Seitenwände 12 aber unmittelbar über der Tränkeschale einander zugekehrte Einbuchtungen 15, durch die der zwischen den Einbuchtungen liegende Raum 16 unter die Breite der Schnauze eines Schweins eingeengt ist. In diesen Zwischenraum 16 mündet von oben her eine Ventildüse 19, die im unteren Ende einer abgestuften Bohrung 17 sitzt, in deren äusseres, mit einem Innengewinde versehenes Ende ein Wasserrohranschlussstutzen 18 abgedichtet eingeschraubt ist. Zum Verschliessen der Öffnung der Düse 19 ist ein Verschlusskörper 24 in Form einer Gummischeibe vorgesehen, welcher auf einem im Schliesszustand des Ventils 19-24 waagrechten Arm 25 gelagert ist, der nach hinten senkrecht von einem im wesentlichen vertikal verlaufenden Ventilbetätigungshebel 26 absteht, dessen unterer Arm 27 eine Ventilbetätigungszunge bildet und dessen oberer Arm 28 einen Spritzschutz darstellt. Der Hebel 26 weist in Höhe des Armes 25 parallel zu den Seitenwänden 12 angeordnete Lappen 31 auf, mittels deren er um eine waagrechte Achse 32 schwenkbar gelagert ist, die zwischen der Verlängerung der Düsenachse 23 nach unten und der Rückwand 13 angeordnet ist, so dass beim Annähern des unteren Hebelarmes 27 an die Rückwand 13 der Verschlusskörper 24 von der Öffnung der Düse 19 abgehoben und dadurch das Ventil geöffnet wird. Um das Ventil 19-24 geschlossen zu halten, ist eine Schraubendruckfeder 33 vorgesehen, die zwischen der Rückwand 13 und dem unteren Hebelarm 27 sowie zwischen den beiden Lappen 31 angeordnet ist und sich dabei mit ihrem vorderen Ende an einer als Stempel dienenden Sechskantmutter 34 abstützt, die durch Kantenanlage an den Lappen 31 gegen Verdrehung gesichert ist und auf einer Schraube 35 sitzt, die durch eine Bohrung 36 im unteren Hebelarm 27 hindurchragt und an ihrem vorderen Ende einen Schlitz 37 für den Eingriff eines Schraubendrehers aufweist. Die Schraube 35 besitzt einen Bund 38, der an der Rückseite des unteren Hebelarmes 27 lose anliegt, und vermag durch Verschiebung der Mutter 34 die Feder 33 mehr oder weniger zu spannen und dadurch die Kraft einzustellen, mit welcher der Verschlusskörper 14 an die Ventildüse 19 gedrückt wird.

Die Lagerung des Ventilbetätigungshebels 26 am Becken 10, das aus Kunststoffmaterial besteht, und dessen Befestigung an einem vertikalen Standrohr 50 mit radialer Bohrung 51 sind folgendermassen ausgeführt:

In dem Zwischenraum 16 ist direkt unter der Deckwand 14 eine ungefähr rechteckige Metallplatte 52 angeordnet, die in ihrer oberen Hälfte mit zwei seitlichen, rechtwinklig nach vorn abgebogenen Laschen 53 versehen ist, an denen der Ventilbetätigungshebel 26 mittels seiner beiden von innen an die Laschen angelegten Lappen 31 angelenkt ist. Die Platte 52 weist in mittlere Höhe zwei den Laschen 53 benachbarte Bohrungen 54 auf, mit denen je eine Bohrung 55 in der Rückwand 13 des Beckens 10 fluchtet. Durch die Bohrungspaare 54-55 sind die beiden Schraubenschenkel 56 einer Bügelschraube 57 gesteckt, die mit ihrem halbkreisförmig gebogenen, gewindelosen Joch 58 das Standrohr 50 auf der dem Becken 10 abgewandten Seite umschlingt und sich mittels auf der konkaven Innenseite des Joches angeordneten kleinen Vorsprüngen 59 ein wenig in das Rohr eingräbt.

In eine in der Mitte der unteren Hälfte der Platte 52 angeordnete Bohrung 60 derselben ist ein beidseitig senkrecht von der Platte abstehender Bolzen 61 eingesetzt, der fest mit der Platte verbunden ist, beispielsweise durch Verschweissen auf der Innenseite der Platte. Dabei sind die Bolzenachse und die Achse der Schraube 35 kolinear und die beiden einander benachbarten Enden des Bolzens 61 bzw. der Schraube, welche die ihnen zugeordneten Enden der Feder 33 tragen, sind durch einen Spalt 62 getrennt, der gross genug ist, damit die Schwenkbewegung des Ventilbetätigungshebels 26 nicht behindert ist.

Der Bolzen 61 ragt durch eine mit der Bohrung 60 der Platte 52 fluchtende Bohrung 63 in der Rückwand 13 des Beckens 10 so weit ins Freie, dass er die Bohrung 51 des Standrohres 50 durchdringt und mit seiner Spitze 64 im Rohrinneren liegt. Die Durchmesser der Wandbohrung 63, des Bolzens 61 und der Rohrbohrung 51 sind einander angepasst, so dass der Bolzen durch das Gewicht des Beckens 10 im wesentlichen auf Scherung beansprucht ist. Dementsprechend sind der Durchmesser des Bolzens 61 und die Wandstärke des Standrohres 50 gewählt.

Auf die Schraubenschenkel 56 sind Muttern 65 geschraubt, die gegen die Innenseite der Platte 52 festgezogen sind und mit Kontermuttern versehen sein können.

Zum Anlegen an eine Mauer 66 ist die Rückwand 13 des Beckens 10 auf ihrer Aussenseite mit mehreren Nocken 67 versehen, deren Stirnflächen in ein und derselben Ebene liegen, die mit der Mauerebene übereinstimmt.

Das Becken 10 kann wahlweise anstatt an dem Standrohr 50 an der Mauer 66 befestigt werden, wobei der Bolzen 61 mit seiner Spitze 64 in das Mauerwerk, beispielsweise in eine Fuge, eindringt, weil die Bolzenspitze 64 jenseits der Stirnebene der Nocken 67 endet. In diesem Fall wird die Bügelschraube 57 durch zwei Mauerdübelschrauben ersetzt, die in der Mauer 66 verankert werden.

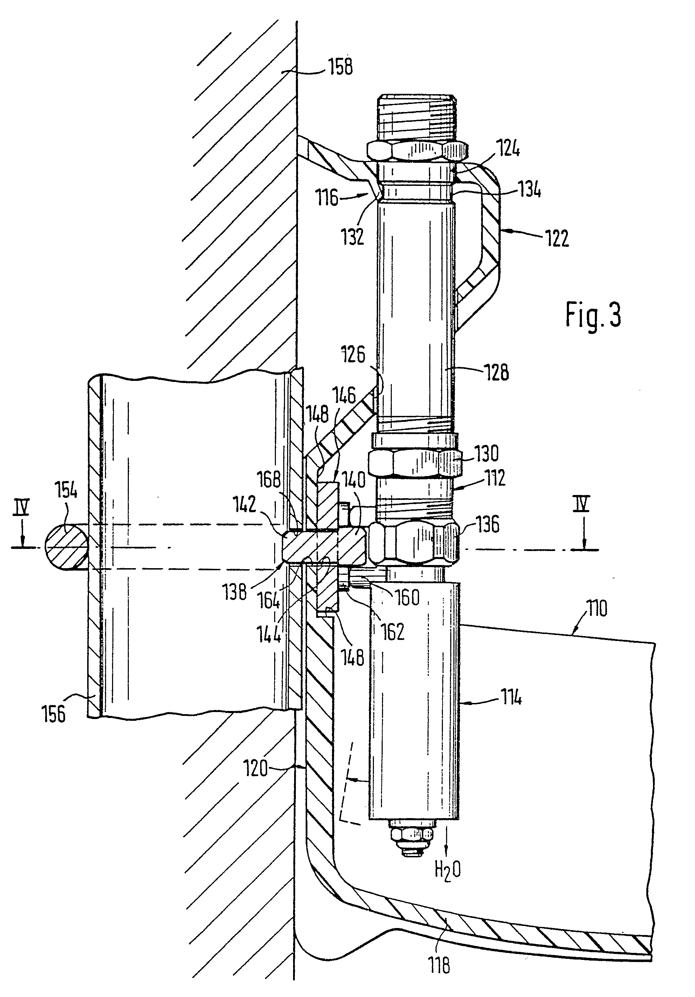

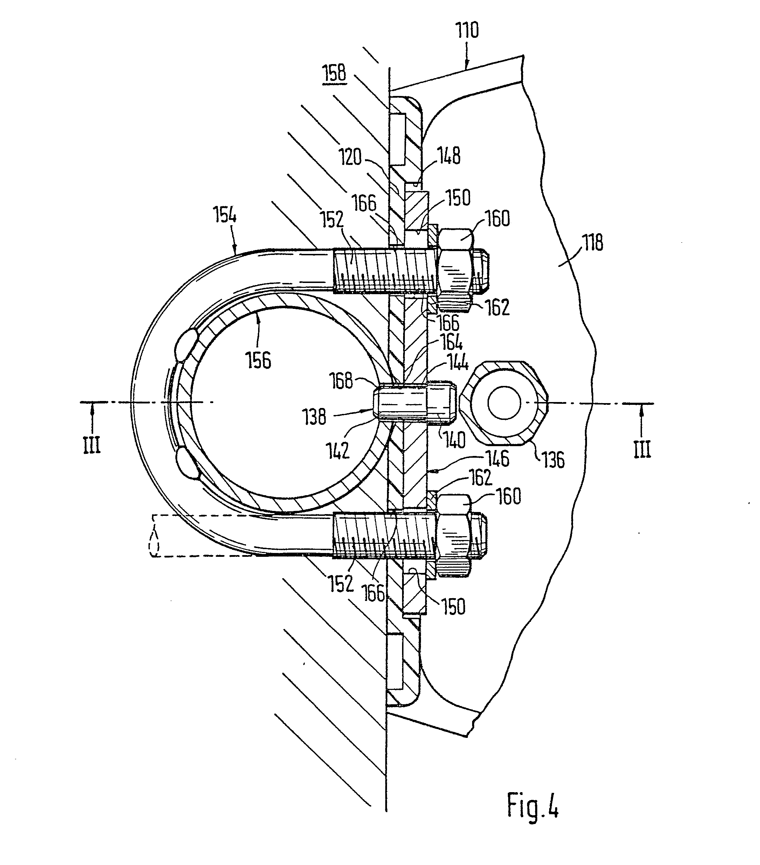

Die zweite Ausführungsform gemäss Fig. 3 und 4 weist ein Tränkebecken 110 auf, das mit einer im Becken hinten angeordneten Ventilvorrichtung 112, einer dieser Vorrichtung zugeordneten Betätigungsvorrichtung 114 und einer Befestigungsvorrichtung 116 versehen ist.

Das Becken 110 weist eine Wasserschale 118, eine ebene vertikale Rückwand 120 und einen im vertikalen Längsschnitt V-förmigen Ansatz 122 auf, der an die Rückwand nach oben anschliesst und mit zwei mittig gelegenen, vertikal fluchtenden Bohrungen 124 und 126 versehen ist, die einen rohrförmigen Stutzen 128 mit leichtem radialem Spiel aufnehmen. Das mit einem Aussengewinde versehene obere Ende des vertikalen Stutzens 128 kann lösbar mit einer vertikalen Wasserzuleitung verbunden werden.

Die Ventilvorrichtung 112 mit anhängender Betätigungsvorrichtung 114 ist mittels einer Überwurfmutter 130 an das untere Ende des Stutzens 128 angeschraubt.

Das gesamte Tränkebecken 110 ist einstückig aus homogenem Kunststoffmaterial hergestellt worden, wobei an die untere Berandung der oberen Bohrung 124 eine elastisch verformbare lippenförmige Feder 132 angeformt wurde, die schräg nach unten weist und sich über den halben Umfang der Bohrungsberandung erstreckt, und zwar längs der hinteren Berandungshälfte. Die Feder 132 greift in eine mit ihr die Befestigungsvorrichtung 116 bildende Ringnut 134 in dem axial nach oben festzulegenden Stutzen 128 ein.

Die Betätigungsvorrichtung 114 ist mittels einer zweiten Überwurfmutter 136 lösbar an der Ventilvorrichtung 112 hängend gelagert und kann in allen Richtungen, insbesondere auch in Richtung auf die Rückwand 120 seitlich ausgelenkt werden. Damit bei dieser Auslenkung nicht auch die Ventilvorrichtung 112 zur Seite gedrückt werden kann, wobei der Stutzen 128 den Ansatz 122 verformen könnte, ist vorgesehen, dass die Überwurfmutter 136 an einem gestuften Metallzylinder 138 seitlich anliegt, der aus einem vorderen Stössel 140 und einem hinteren Bolzen 142 besteht, der in einer koaxialen Bohrung 144 einer ebenen, rechteckigen Metallplatte 146 festsitzt, an deren Bohrungsberandung der Stössel 140 anschlägt. Die Metallplatte 146 liegt mit waagrechter Längsrichtung in einer an den Ansatz 122 angrenzenden, rechteckigen Randvertiefung 148 der Rückwand 120. Längs ihrer Mittellinie ist die Metallplatte 146 an ihren zwei Enden mit je einem Langloch 150 versehen, durch das je ein mit Aussengewinde versehener Schraubenschenkel 152, einer der Bügelschraube 57 der ersten Ausführungsform entsprechenden Bügelschraube 154 gesteckt ist, die im Ausführungsbeispiel um ein vertikales Standrohr 156 zur Befestigung des Tränkebeckens 110 gelegt ist oder, wie angedeutet, durch zwei Schrauben ersetzt sein kann, die mittels Dübeln in einer Mauer 158 verankert sind, an der die Rückwand 120 des Beckens 110 anliegend zu denken ist.

Auf die Schraubenschenkel 152 ist je eine Mutter 160 geschraubt, die über eine Unterlegscheibe 162 gegen die Berandung des zugeordneten Langloches 150 festgezogen ist. Die Metallplatte 146 weist auf ihrer waagrechten Mittellinie eine zentrale Bohrung 164 und zwei seitliche Bohrungen 166 auf, durch die je einer der beiden Schraubenschenkel 152 gesteckt ist, während durch die Bohrung 164 der an seiner Stirnseite stumpfe Bolzen 142 in eine Bohrung 168 des Standrohres 156 hineinragt. Im Falle der Befestigung des Tränkebeckens 110 an einer Mauer 158 würde ein zugespitzter Bolzen 142 verwendet.

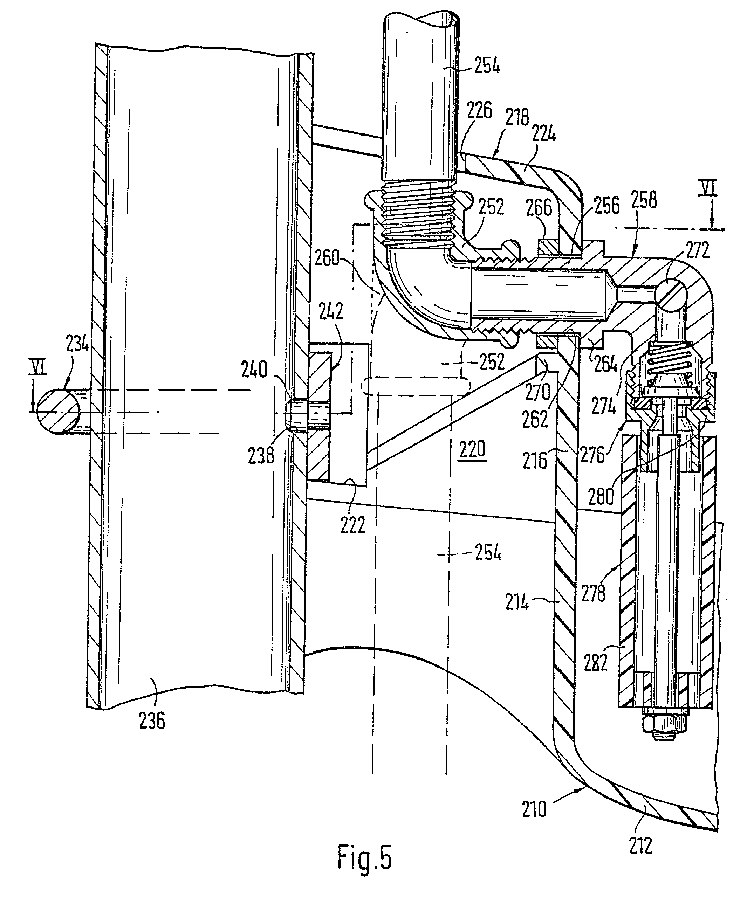

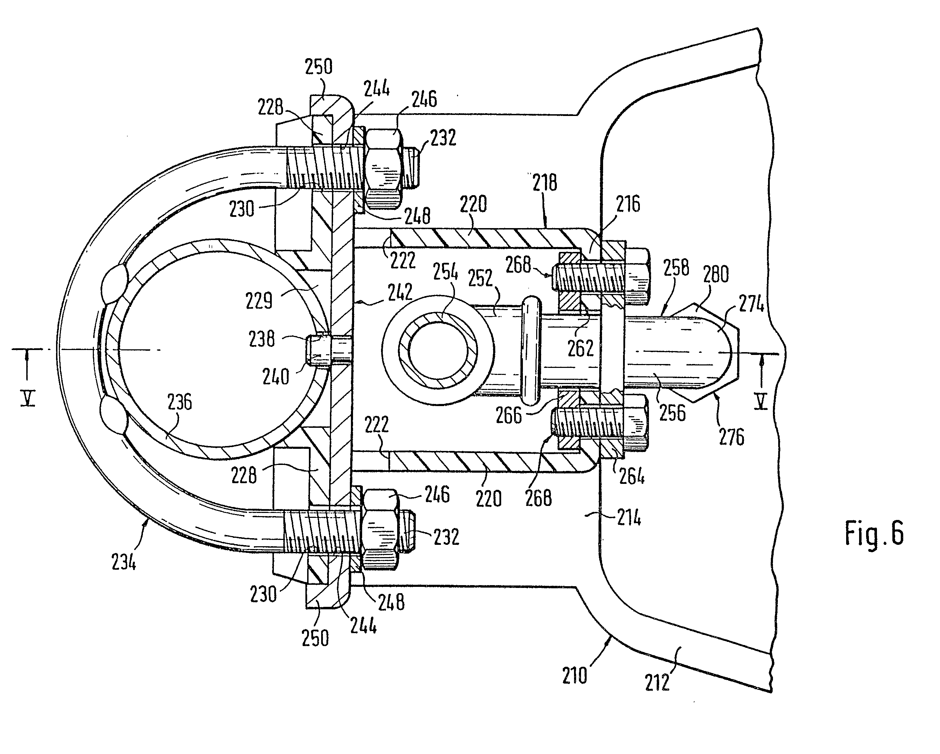

Die dritte Ausführungsform gemäss Fig. 5 und 6 ist ein Tränkebecken 210 mit einer Tränkeschale 212, an deren Rückwand 214 vertikal nach oben mittig die Vorderwand 216 eines Anschlussgehäuses 218 einstückig angeformt ist, welches zwei parallele Seitenwände 220 mit je einer hinteren Randausnehmung 222 und einen Deckel 224 mit einem Durchbruch 226 aufweist, während es an seiner Unterseite offen ist. Das Tränkebecken 210 ist mit zwei einstückig an das Anschlussgehäuse 218 angeformten flanschartigen Befestigungsteilen 228 versehen, die bezüglich der vertikalen Halbierungsebene V-V des Beckens symmetrisch als dessen Rückwand ausgebildet sind und je eine Bohrung 230 zur Aufnahme eines von zwei Schraubenschenkeln 232 einer Bügelschraube 234 aufweisen, die an einem vertikalen Standrohr 236 angreift, das eine Bohrung 238 zur Aufnahme eines Bolzens 240 besitzt, der im Zentrum einer ebenen, rechteckigen, mit ihrer Längsrichtung waagrecht angeordneten Metallplatte 242 verankert ist, die längs ihrer kürzeren, vertikalen Mittellinie am Standrohr 236 und mit ihren zwei seitlichen Enden plan an je einem der beiden Befestigungsteile 228 anliegt, deren Bohrungen 230 mit Bohrungen 244 in der Metallplatte 242 zur Aufnahme der Schraubenschenkel 232 fluchten, auf die je eine Mutter 246 von vorn aufgeschraubt ist, die über eine Unterlegscheibe 248 gegen die Metallplatte 242 festgezogen ist, die an ihren beiden seitlichen Enden mit je einer rechtwinklig nach hinten abgebogenen, einstückig angeformten Haltelasche 250 versehen ist, welche die äussere Ecke des zugeordneten Befestigungsteiles 228 seitlich erfasst.

Die beiden Befestigungsteile 228 bilden durch ihren Zwischenraum 229 einen Durchbruch der Beckenrückwand, welcher das Standrohr 236 mit einem Teil seines Umfangs aufnimmt.

In dem Anschlussgehäuse 218 verbindet im Ausführungsbeispiel ein rechtwinkliger Krümmer 252 ein durch den Durchbruch 226 vertikal hineinragendes Rohrende 254 einer Wasserzuleitung mit dem waagrechten Schenkel 256 eines zweiten Krümmers 258. Wie mit gestrichelten Linien in Fig. 5 angedeutet, kann das Rohrende 254 wahlweise von unten her in das Anschlussgehäuse 218 hineinragen. Statt des ersten Krümmers 252 kann, wie in Fig. 5 durch eine punktierte Linie angedeutet ist, ein T-Stück 260 verwendet werden, das innerhalb des Anschlussgehäuses 218 ein vertikal durchgehendes Wasserleitungsrohr unterbricht.

Der waagrechte Schenkel 256 des zweiten Krümmers 258 ist durch eine Bohrung 262 der Vorderwand 216 des Anschlussgehäuses 218 gesteckt und weist einen flanschartigen Befestigungsbund 264 auf, der an der Aussenseite der Vorderwand 216 anliegt, an deren Innenseite eine dem Bund 264 entsprechende Lasche 266 angreift, die auf den waagrechten Schenkel 256 des zweiten Krümmers 258 gesteckt ist und mittels zweier Schraubverbindungen 268 derart mit dem Bund 264 verbunden ist, dass Befestigungsbund und Lasche die von der Vorderwand 216 gebildete Berandung der Bohrung 262 einklemmen und dadurch den zweiten Krümmer 258 festhalten. Zur Unterstützung der Lasche 266 ist an die Innenseite der Vorderwand 216 des Anschlussgehäuses 218 eine Rippe 270 als Steg angeformt.

Im Knie des zweiten Krümmers 258 befindet sich eine Regulierschraube 272 zum Einstellen des Wasserstromes, der durch einen vertikalen Schenkel 274 des zweiten Krümmers 258 nach unten in eine Ventilvorrichtung 276 mit anhängender Betätigungsvorrichtung 278 geleitet wird. Die Ventilvorrichtung 276 ist mittels einer Übewurfmutter 280 an den vertikalen Schenkel 274 des zweiten Krümmers 258 angefügt. Durch seitliches Auslenken einer normalerweise vertikal angeordneten Hülse 282 der Ventilbetätigungsvorrichtung 278, beispielsweise in Richtung auf die Rückwand 214 der Tränkeschale 212, wird ein Wasserzufluss durch die Hülse bewirkt.

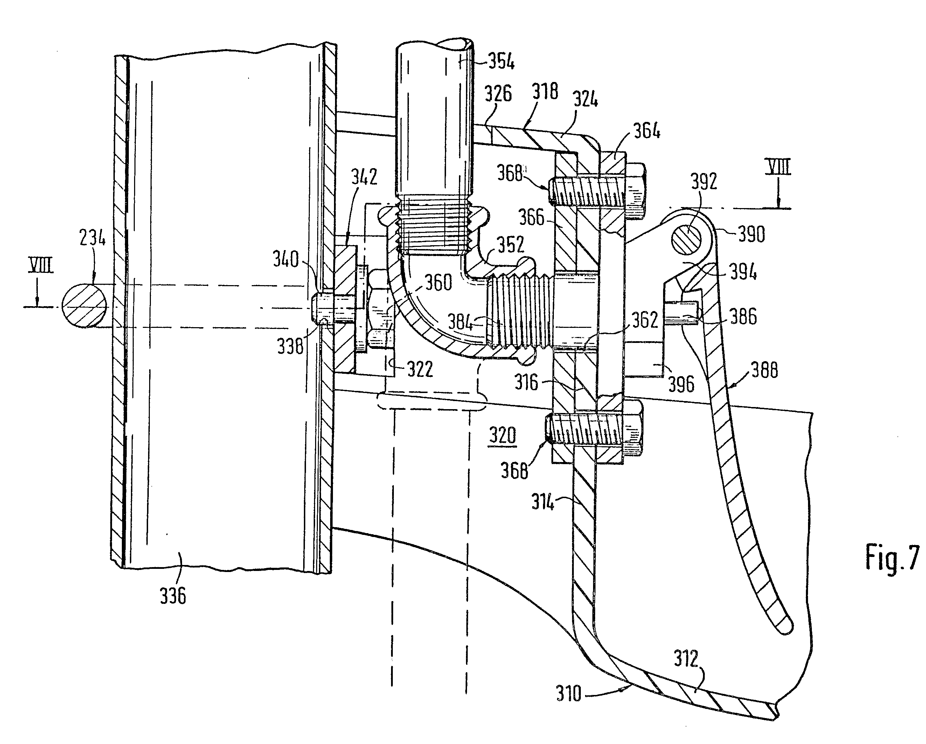

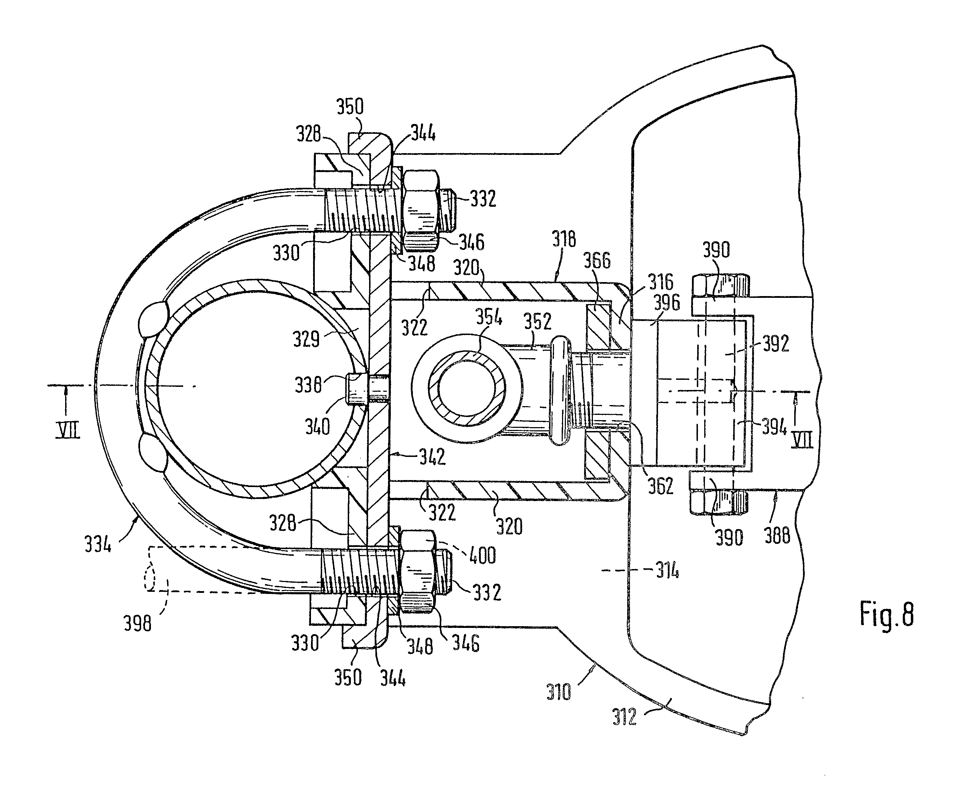

Die vierte Ausführungsform gemäss Fig. 7 und 8 entspricht weitgehend der dritten Ausführungsform, so dass deren vorstehende Beschreibung auch für die vierte Aufürungsform gilt, falls sich aus dem nachstehenden nichts anderes ergibt. Soweit die vierte mit der dritten Ausführungsform übereinstimmt, sind gleiche oder einander entsprechende Teile in der Zeichnung mit um 100 höheren Bezugszahlen versehen. Statt eines zweiten Krümmers für eine Ventilvorrichtung mit Betätigungsvorrichtung, wie sie im dritten Ausführungsbeispiel vorhanden sind, ist beim vierten Ausführungsbeispiel ein den waagrechten Schenkel des zweiten Krümmers ersetzendes zylindrisches Ventilgehäuse 384 vorgesehen, das ebenfalls in Einlochmontage mittels Befestigungsbund 364 und Lasche 366, die hier beide in die Vertikale gedreht sind, an der Vorderwand 316 des Anschlussgehäuses 318 drehfest gelagert ist. Das Ventilgehäuse 384 nimmt einen koaxialen Ventilstössel 386 auf, der waagrecht nach vorn über die Tränkeschale 312 vorsteht und mittels einer einen einarmigen Hebel darstellenden Ventilbetätigungsklappe 388 entgegen einer Rückstellkraft nach hinten verschiebbar ist. Die Klappe 388 ist mit zwei an ihrem oberen Ende angeordneten Augen 390 an einer waagrechten Achse 392 drehbar gelagert, die ihrerseits in einem länglichen Auge 394 gelagert ist, das von einem Ring 396 absteht, der den Stössel 386 umgibt und an der Vorderseite des Befestigungsbundes 364 angebracht ist, beispielsweise durch einstückige Anformung.

Wie in Fig. 4 und 8 durch die punktierten Linien angedeutet ist, kann in jedem Ausführungsbeispiel, in dem eine Bügelschraube verwendet wird, diese durch zwei an die Stelle derer beider Schraubenschenkel tretende Mauerdübelschrauben 398 ersetzt werden, die entweder im Mauerwerk verankert sind und mit je einer der Mutter 346 entsprechenden Mutter versehen werden oder aber je einen die Mutter 346 ersetzenden Schraubenkopf 400 aufweisen und in das gedübelte Mauerwerk eingeschraubt werden.

## Patentansprüche

1. Viehselbsttränkebecken mit einer Bohrungen (55; 166; 230; 330) aufweisenden Rückwand (13; 120; 228; 328) aus nachgiebigem Material wie Kunststoff die an ein Standrohr (50; 156; 236; 336) mit radialer Bohrung (51; 164; 238; 338) oder an eine Mauer (66; 158) anlegbar ist, gekennzeichnet durch eine auf der Innenseite der Rückwand (13; 120, 228; 328) angeordnete Metallplatte (52; 146; 242; 342) mit einem senkrecht abstehenden, durch einen Durchbruch (229; 329), insbesondere eine Bohrung (63; 164) der Rückwand ragenden Bolzen (16; 142; 240; 340) für den Eingriff in die Rohrbohrung (51; 164; 238; 338) beziehungsweise für das Eindringen in die Mauer (66; 158), und mit zwei Befestigungsdurchbrüchen (150), insbesondere Befestigungsbohrungen (54; 244; 344), die mit Bohrungen (55; 166; 230; 330) der Rückwand fluchten; und durch eine am Standrohr (50; 156; 236; 336) anlegbare Bügelschraube (57; 154; 234; 334), deren Schraubenschenkel (56; 152; 232; 332) durch die Paare fluchtender Bohrungen greifen und mit gegen die Platte festziehbaren Muttern (65; 160; 246; 346) versehen sind, beziehungsweise durch zwei Mauerdübelschrauben (398), die durch die Paare fluchtender Bohrungen greifen und deren Köpfe (400) oder Muttern (346) gegen die Platte festziehbar sind.

2. Viehselbsttränkebecken nach Anspruch 1, dadurch gekennzeichnet, dass die Rückwand (120) auf ihrer Innenseite eine Vertiefung (148) aufweist, in der die hineinpasende Platte (146) liegt.

3. Viehselbsttränkebecken nach Anspruch 1 oder 2, dadurch gekennzeichnet, dass der Bolzen (61) eine in die Mauer (66) dringende Spitze (64) aufweist.

4. Viehselbsttränkebecken nach einem der Ansprüche 1 bis 3, dadurch gekennzeichnet, dass das halbkreisförmig gebogene, gewindelose Joch (58) der Bügelschraube (57) auf seiner konkaven Innenseite in das Strandrohr (50) eindringende Vorsprünge (59) aufweist.

5. Viehselbsttränkebecken nach einem der Ansprüche 1 bis 4, dadurch gekennzeichnet, dass dessen Rückwand von einer Mauer (66) Abstand haltende Nocken (67) aufweist, deren Stirnfläche in ein und derselben Ebene liegen, und dass zumindest zur Befestigung des Beckens (10) an einer Mauer (66) das Bolzenende (64) die Nockenebene durchdringt.

6. Viehselbsttränkebecken nach einem der Ansprüche 1 bis 5, gekennzeichnet durch ein aus ortsfester Düse (19) und beweglichem Verschlusskörper (24) bestehendes Wasserzulaufventil sowie einen drehbaren Hebel (26) mit einem den Verschlusskörper tragenden kürzeren Arm (28) und einem gefederten längeren Arm (27) als Ventilbetätigungszunge, die um eine waagrechte Achse (32) schwenkbar ist, wobei der Hebel (26) an der Platte (52) angelenkt ist und sich die Feder (33) an der Plate abstützt.

7. Viehselbsttränkebecken nach Anspruch 6, dadurch gekennzeichnet, dass die Feder (33) auf einer die Platte (52) nach vorn durchdringenden Verlängerung des Bolzens (61) gelagert ist.

8. Viehselbsttränkebecken nach einem der Ansprüche 1 bis 5, gekennzeichnet durch zwei vertikal fluchtende Bohrungen (24, 126) zur Aufnahme und zum axialen Festlegen eines geraden Abschnitts (128) einer Wasserzuleitung, an welchen mittels einer Überwurfmutter (13) eine Ventilvorrichtung (112) mit anhängender Ventilbetätigungsvorrichtung (114) angefügt ist, wobei die Metallplatte (146) auf ihrer dem Bolzen (142) abgewandten Seite mit einem kolinearen Stössel (140) versehen ist, der zur seitlichen Stützung der Ventilvorrichtung (112) mit einem in gleicher Höhe wie der Stössel angeordneten Teil (Überwurfmutter 136) zusammenwirkt.

9. Viehselbsttränkebecken nach Anspruch 8, dadurch gekennzeichnet, dass der Bolzen (142) und der Stössel (140) einen gestuften Metallzylinder (138) bilden, der in einer koaxialen Bohrung (144) der Metallplatte (146) sitzt, an deren Berandung der Stössel (140) oder Bolzen anschlägt.

10. Viehselbsttränkebecken nach einem der Ansprüche 1 bis 9, gekennzeichnet durch zwei die Rückwand bildende Befestigungsteile (228; 328), zwischen denen der Durchbruch (229; 329) der Rückwand besteht, und dadurch, dass die Metallplatte (242; 342) an ihren Enden mit rechtwinklig abebogenen Haltelaschen (250; 350) versehen ist, welche die Befestigungsteile (228, 328) seitlich erfassen.

11. Viehselbsttränkebecken nach eine der Ansprüche 1 bis 7 und 10, gekennzeichnet durch ein Anschluss-Gehäuse (218; 318) zur Aufnahme eines Krümmers (252; 352) oder T-Stücks (260; 360) einer Wasserleitung (254; 354), welches (218; 318) zwei parallele Seitenwände (220; 320) aufweist, wobei beide Seitenwände (220; 320) je einen Durchbruch (222; 322) für den Durchtritt der Metallplatte (242; 342) aufweisen, die an der Rückwand (228; 328) des Beckens angreift.

12. Viehselbsttränkebecken nach Anspruch 11, dadurch gekennzeichnet, dass dessen Anschluss-Gehäuse (218; 318) eine einer tränkeschale (212; 312) zugekehrte Vorderwand (216; 316) mit einer Bohrung (262; 362) zur Einlochmontage eines zweiten Krümmers (258) oder eines Ventilgehäuses (384) aufweist, und dass die Berandung der Montagebohrung (262; 362) der Gehäusevorderwand (216; 316) zwischen zwei Metallplatten (264 und 266; 364 und 366) eingeklemmt ist, die mittels zweier die Vorderwand durchdringender Schraubenbolzen (268; 368) miteinander verbunden sind und den zweiten Krümmer (258) beziehungsweise das Ventilgehäuse (384) lagern.

13. Viehselbsttränkebecken nach Anspruch 12, dadurch gekennzeichnet, dass die Vorderwand (216) des Anschlussgehäuses (218) auf ihrer Innenseite mit einem Steg (270) versehen ist, auf dem sich die innenliegende Klemmplatte (266) abstützt.

14. Viehselbsttränkebecken nach Anspruch 12 oder 13, dadurch gekennzeichnet, dass der zweite Krümmer (258) mit einer wassertromeinstellschraube (272) versehen ist und dass an den zweiten Krümmer (258) mittels einer Überwurfmutter (280) eine Ventilvorrichtung (276) mit anhängender Ventilbetätigungsvorrichtung (278) angefügt ist.

15. Viehselbsttränkebecken nach den Ansprüchen 12 bis 14, dadurch gekennzeichnet, dass die aussenliegende Klemmplatte (264; 364) und der zweite Krümmer (258) beziehungsweise das Ventilgehäuse (384) einstückig ausgebildet sind.

16. Viehselbsttränkebecken nach Anspruch 15, dadurch gekennzeichnet, dass das Ventilgehäuse (384) mit wenigstens einem Auge (394) zur Anlenkung einer Ventilbetätigungsklappe (388) versehen ist.

## Claims

1. Self-watering apparatus for livestock, having a rear wall (13; 120; 228; 328) of resilient material such as synthetic plastics material and incorporating bores (55; 166; 230; 330) and adapted to be fitted to a stand pipe (50; 156; 236; 336) with radial bore (51; 164; 238; 338) or against a wall (66; 158), characterised by, disposed on the inside of the rear wall (13; 120; 228; 328), a metal plate (52; 146; 242; 342) with a perpendicularly projecting bolt (16; 142; 240; 340) projecting through an aperture (229; 329), particularly a bore (63; 164) in the rear wall for engagement into the pipe bore (51; 164; 238; 338) or for penetration into the wall (66; 158) respectively and with two fixing apertures (150), particularly fixing bores (54; 244; 344) aligned with bores (55; 166; 230; 330) in the rear wall; and by an U-bolt (57; 154; 234; 334) which can be fitted to the standpipe (50; 156; 236; 336) and of which the bolt arms (56; 152; 232; 332) engage through the pairs of aligned bores and are provided with nuts (65; 160; 246; 346) which can be tightened against the plate, or respectively by two wall dowel bolts (398) which engage through the pairs of aligned bores and of which the heads (400) or nuts (346) can be tightened against the plate.

2. Self-watering apparatus for livestock according to Claim 1, characterised in that the rear wall (120) has on its inside a depression (148) in which lies the plate (146) which is intended to fit therein.

3. Self-watering apparatus for livestock according to Claim 1 or 2, characterised in that the bolt (61) has a tip (64) which penetrates the wall (66).

4. Self-watering apparatus for livestock according to one of Claims 1 to 3, characterised in that the semi-circularly arcuate threadless yoke (58) of the U-bolt (57) has on its concave inside face projections (59) which penetrate the stand pipe (50).

5. Self-watering apparatus for livestock according to one of Claims 1 to 4, characterised in that its rear wall has, for establishing a gap in respect of a wall (66), projections (67) of which the end faces lie in one and the same plane and in that the bolt end (64) penetrates the plane of the projections at least for fixing the apparatus (10) to a wall (66).

6. Self-watering apparatus for livestock according to one of Claims 1 to 5, characterised by a water supply valve consisting of a stationary nozzle (19) and a movable closure member (24) and a rotatable lever (26) with a shorter arm (28) carrying the closure member and a sprung longer arm (27) serving as a valve actuating tongue and pivotable about a horizontal axis (32), the lever (26) being articulated on the plate (52) and the spring (33) being biased on the plate.

7. Self-watering apparatus for livestock according to Claim 6, characterised in that the spring (33) is mounted on an extension of the bolt (61) which penetrates forwards and through the plate (52).

8. Self-watering apparatus for livestock according to one of Claims 1 to 5, characterised by two vertically aligned bores (124, 126) to accommodate and axially fix a straight portion (128) of a water supply line on which by means of a cap nut (13) a valve device (112) with attached valve actuating device (114) is fitted, the metal plate (146) having on its side remote from the bolt (142) a colinear push rod (140) which, for lateral supporting of the valve device (112), cooperates with a part (cap nut 136) which is disposed at the same height as the push rod.

9. Self-watering apparatus for livestock according to Claim 8, characterised in that the bolt (142) and the push rod (140) form a stepped metal cylinder (138) seated in a coaxial bore (144) in the metal plate (146), on the rim of which the push rod (140) or the bolt abuts.

10. Self-watering apparatus for livestock according to one of Claims 1 to 9, characterised by two fixing parts (228; 328) forming the rear wall and between which is provided the aperture (229; 329) in the rear wall and in that the metal plate (242; 342) is provided at its ends with rectangularly bent over retaining lugs (250; 350) which engage around the sides of the fixing parts (228; 328).

11. Self-watering apparatus for livestock according to one of Claims 1 to 7 and 10, characterised by a connection housing (218; 318) to accommodate a bend (252; 352) or T-piece (260; 360) of a water pipe (254; 354) having (218; 318) two parallel side walls (220; 320), both side walls (220; 320) having respective apertures (222; 322) for passage of the metal plate (242; 342) which engages on the rear wall (228; 328) of the apparatus.

12. Self-watering apparatus for livestock according to Claim 11, characterised in that the connection housing (218; 318) thereof has, facing a watering bowl (212; 312) a front wall (216; 316) with a bore (262; 362) for single-hole mounting of a second bend (258) or of a valve body (384), and in that the rim around the mounting bore (262; 362) of the front wall (216; 316) of the housing is clamped between two metal plates (264 and 266; 364 and 366) which are connected to each other by means of two screwbolts (268; 368) which pass through the front wall, mounting the second bend (258) or valve body (384).

13. Self-watering apparatus for livestock according to Claim 12, characterised in that the front wall (216) of the connecting housing (218) is provided on its inside with a web (270) on which the inner clamping plate (266) is braced.

14. Self-watering apparatus for livestock according to Claim 12 or 13, characterised in that the second bend (258) is provided with a water flow adjusting screw (272) and in that a valve device (276) with connected valve actuating device (278) is attached to the second bend (258) by means of a cap nut (280).

15. Self-watering apparatus for livestock according to Claims 12 to 14, characterised in that the outer clamping plate (264; 364) and the second bend (258) or alternatively the valve body (384) are constructed in one piece.

16. Self-watering apparatus for livestock according to Claim 15, characterised in that the valve body (384) is provided with at least one lug (394) for articulation of a valve actuating flap (388).

## Revendications

1. Abreuvoir automatique pour bestiaux comportant une paroi arrière (13; 120; 228; 328) réalisée en un matériau flexible tel qu'une matière plastique, cette paroi arrière comportant des perçages (55; 166; 230; 330) et pouvant être montée sur un tube vertical (50; 156; 236; 336) muni d'un perçage radial (51; 164; 238; 338) ou sur un mur (66; 158), caractérisé par une plaque métallique (52; 146; 242; 342) montée sur la face inférieure de la paroi arrière (13; 120; 228; 328) et comportant un axe (16; 142; 240; 340), qui fait saillie perpendiculairement à la plaque en traversant une ouverture (229; 329), notamment un perçage (63; 164) de la paroi arrière et qui est destiné à s'engager dans le perçage (51; 164; 238; 338) du tube ou, suivant le cas, à s'encastrer dans le mur (66; 158), ainsi que deux ouvertures de fixation (150), notamment des perçages de fixation (54; 244; 344), qui sont alignés avec des perçages (55; 166; 230; 330) de la paroi arrière; et par un boulon-étrier (57; 154; 234; 334), pouvant être monté sur le tube vertical (50; 156; 236; 336) et dont les branches filetées (56; 152; 232; 332) s'engagent à travers les paires de perçages alignés et sont munis d'écrous (65; 160; 246; 346) pouvant être serrés contre la plaque, ou, suivant le cas, par deux chevilles d'ancrage filetées (398) solidaires du mur, qui s'engagent dans les paires de perçages alignés et dont les têtes (400) ou les écrous (346) peuvent être serrés contre la plaque.

2. Abreuvoir automatique pour bestiaux selon la revendication 1, caractérisé en ce que la paroi arrière (120) présente sur sa face intérieure un renfoncement (148) dans lequel la plaque (146) est disposée par emboîtement.

3. Abreuvoir automatique pour bestiaux selon la revendication 1 ou 2, caractérisé en ce que l'axe (61) comporte une pointe (64) pénétrant dans le mur (66).

4. Abreuvoir automatique pour bestiaux selon l'une des revendications 1 à 3, caractérisé en ce que l'armature non filetée (58), recourbée sous une forme semi-circulaire, du boulon-étrier (57) comporte, sur sa face intérieure concave, des appendices saillants (59) pénétrant dans le tube vertical (50).

5. Abreuvoir automatique pour bestiaux selon l'une des revendications 1 à 4, caractérisé en ce que sa paroi arrière comporte des bossages (67) qui la maintiennent à distance d'un mur (66) et dont les surfaces frontales sont situées dans un seul et même plan, et en ce qu'au moins pour la fixation de l'abreuvoir (10) sur un mur (66), l'extrémité (64) de l'axe traverse le plan des bossages.

6. Abreuvoir automatique pour bestiaux selon l'une des revendications 1 à 5, caractérisé par une valve d'admission d'eau, constituée d'une buse fixe (19) et d'un obturateur mobile (24), ainsi que par un levier pivotant (26) présentant un bras court (28) qui porte l'obturateur et un bras long (27) chargé par un ressort et réalisé sous la forme d'une languette d'actionnement de la valve qui peut basculer autour d'un axe horizontal (32), le levier (26) étant articulé sur la plaque (52) et le ressort (33) prenant appui sur la plaque.

7. Abreuvoir automatique pour bestiaux selon la revendication 6, caractérisé en ce que le ressort (33) est monté sur un prolongement de l'axe (61), qui traverse la plaque (52) vers l'avant.

8. Abreuvoir automatique pour bestiaux selon l'une des revendications 1 à 5, caractérisé par deux perçages (124, 126) alignés dans une direction verticale et servant à recevoir et à immobiliser axialement un tronçon rectiligne (128) d'une conduite d'amenée d'eau à laquelle est raccordé, au moyen d'un écrou d'accouplement (13), un dispositif à valve (112) muni d'un dispositif suspendu d'actionnement de valve (114), la plaque métallique (146) étant pourvue, sur sa face tournée à l'opposé de l'axe (142), d'un poussoir colinéaire (140) qui coopère avec une pièce (écrou d'accouplement 136) disposée à la même hauteur que le poussoir, pour réaliser le soutien latéral du dispositif à valve (112).

9. Abreuvoir automatique pour bestiaux selon la revendication 8, caractérisé en ce que l'axe (142) et le poussoir (140) forment un cylindre métallique à épaulement (138) qui est logé dans un perçage coaxial (144) de la plaque métallique (146) sur le bord de laquelle le poussoir (140) ou l'axe vient en butée.

10. Abreuvoir automatique pour bestiaux selon l'une des revendications 1 à 9, caractérisé par deux organes de fixation (228; 328) formant la paroi arrière et entre lesquels se trouve disposée l'ouverture (229; 329) de la paroi arrière, et par le fait que la plaque métallique (242; 342) est munie, à ses extrémités, de pattes d'arrêt (250; 350) coudées à angle droit et enserrant latéralement les organes de fixation (228; 328).

11. Abreuvoir automatique pour bestiaux selon l'une des revendications 1 à 7 et 10, caractérisé par un boîtier de raccordement (218; 318) destiné à recevoir un coude (252; 352) ou un raccord en T (260; 360) d'une canalisation d'eau (254; 354), et qui (218; 318) comporte deux parois latérales parallèles (220; 320), les deux parois latérales (220; 320) comportant chacune une ouverture (222; 322) servant au passage de la plaque métallique (242; 342) qui est retenue sur la paroi arrière (228; 328) de l'abreuvoir.

12. Abreuvoir automatique pour bestiaux selon la revendication 11, caractérisé en ce que le boîtier de raccordement (218; 318) de cet abreuvoir comporte une paroi frontale (216; 316) qui est tournée vers une cuvette d'abreuvoir (212; 312) et comporte un perçage (262; 362) servant à réaliser le montage monotrou d'un second coude (258) ou d'un corps de valve (384), et en ce que le bord du perçage de montage (262; 362) de la paroi frontale (216; 316) du boîtier est serré entre deux plaques métalliques (264 et 266; 364 et 366), qui sont reliées l'une à l'autre au moyen de deux boulons (268; 368) traversant la paroi frontale et supportant le second coude (258) ou, suivant le cas, le corps de valve (384).

13. Abreuvoir automatique pour bestiaux selon la revendication 12, caractérisé en ce que la paroi frontale (216) du boîtier de raccordement (218) est munie, sur sa face intérieure, d'une membrure (270) sur laquelle prend appui la plaque interne de serrage (266).

14. Abreuvoir automatique pour bestiaux selon la revendication 12 ou 13, caractérisé en ce que le second coude (258) est muni d'une vis de réglage du débit de l'eau (272) et en ce qu'un dispositif à valve (276), auquel est suspendu un dispositif d'actionnement de valve (278), est raccordé au second coude (258) au moyen d'un écrou d'accouplement (280).

15. Abreuvoir automatique pour bestiaux selon les revendications 12 à 14, caractérisé en ce que la plaque externe de serrage (264; 364) et le second coude (258) ou, suivant le cas, le corps de valve (384) sont réalisés d'un seul tenant.

16. Abreuvoir automatique pour bestiaux selon la revendication 15, caractérisé en ce que le corps de valve (384) est muni d'au moins un œillet (394) pour l'articulation d'un clapet d'actionnement de valve (388).

## Fig.1

## Fig.2

Fig. 3

0 087 589

13

Fig.4

Fig.5

Fig.6

Fig. 7

Fig.8